# EUROPEAN PATENT APPLICATION

(11) **EP 1 618 935 A1**
(43) Date of publication of application: **25.01.2006**
(21) Application number: 05015596.9
(22) Date of filing: 19.07.2005
(51) Int. Cl.: B01D 1/26, C13F 1/00

(54) **Evaporator system for fruit and vegetables having a low power consumption and a very low heat damage**

(30) Priority: 20.07.2004 IT PR20040050
(71) Applicant: FMC Technologies Italia S.p.A., I-43100 Parma PR (IT)
(72) Inventor: Guatelli, Giacomo, 43022 Montechiarugolo (Parma) (IT)
(74) Representative: Guareschi, Antonella

(57) **Abstract**

The invention finds application in the field of evaporator systems for food products, particularly fruit and vegetables, and relates to a multiple-effect evaporator system (E) comprising a combination of a T.A.S.T.E. (Thermally Accelerated Short Time Evaporator) unit having one or more effects and stages (T1, T2,... T(n-m)) and a Forced Circulation finishing unit having one or more effects and stages (FC1, FC2, ..., FCm).

A pump TP(n-m) draws the product that is being concentrated from the last effect of the T.A.S.T.E. unit, and transfers it to the inlet of the Forced Circulation unit, where it is further concentrated to the desired degree.

Then, an extraction pump (PE) extracts the product from the Forced Circulation finishing unit (FC).

## Description

This invention relates to an evaporator system for fruit and vegetables having a low power consumption and a very low heat damage.

Evaporation is a one-step operation which is aimed at obtaining a more concentrated product from a more diluted product.

This result is achieved by simultaneous transfer of material and energy by removing vapor from the fluid to be concentrated as the latter is heated to the boiling point.

The energy required for evaporation is provided by live steam which condenses in a tubenest and causes heating/evaporation of the product to be concentrated. The vapor that is produced thereby is separated from the liquid phase in the vapor separation chamber and led to the next effect through appropriate lines and devices adapted to prevent the passage of even the slightest liquid particles.

Amongst the main types of evaporator systems, both Forced Circulation and T.A.S.T.E. Evaporator systems have long been known.

In Forced Circulation evaporators the product to be concentrated in circulated in the tubes of the shell-and-tube exchanger by a pump that is adequately sized to allow an effective heat exchange with vapor in the condensation step.

The product in the tubes of the exchanger, by virtue of the heating effect caused by the vapor on the shell side, reaches a temperature above the boiling point at the same pressure as in the separation chamber so that, as it arrives therein, it is instantly cooled thereby releasing an amount of vapor (flash) proportional to the circulating mass and to overheating thereof.

Forced Circulation evaporators may be of the upward type (with the product circulating in the shell-and-tube exchanger, usually vertically oriented, in an upward direction) or of the downward type (with a downwardly circulating product).

On the other hand, a T.A.S.T.E. Evaporator unit is composed of one or more stages, each having a tubenest, with the product to be evaporated being evenly distributed at the top of such tubenet, to form a thin film adhering to the inner perimeter of each tube.

The product so distributed falls downwards by gravity and especially by being entrained by the vapor developing in the product during the concentration step.

The acronym T.A.S.T.E. (Thermally Accelerated Short Time Evaporator) indicates the peculiar features of this type of evaporator:
- high acceleration imparted by the vapor developing in the product during concentration to the liquid phase adhering to the walls of the tubes of the tubenest;
- resulting progressive increase of the product speed within the tubes;
- very short contact time with the heat source (vapor in the condensation step on the shell side).

Each effect or stage is composed of four mutually connected main portions:
- a product distribution unit at the top of the heat exchanger;
- a heat exchanger in which (tube side) the product is evaporated after condensation of vapor (shell side) from the previous effect;
- a liquid-vapor separation chamber;
- a transfer pump to transfer the liquid phase separated from the vapors to the next stage, which vapors reach the next effect or the condenser (after the last effect).

It should be noted that the words "effects" and "stages", that are often used as synonyms, shall be more precisely intended to respectively relate to the steam circuit (the stage heated by live steam being called first effect, and the following, heated by the vapor re-evaporated in the first effect being called second effect, etc.), and to the product run (the product feeding stage being called first stage, the next stage being called second stage, etc.).

In consideration of the above, only when the juice is concentrated in equi-current flow with the vapor, the stages are numbered like the effects.

As is known, liquid distribution at the top of each exchanger is the most difficult step of the whole evaporation process.

An uneven liquid distribution causes at best a decreased efficiency of the evaporator, and at worst (insufficient wetting of the tube surfaces of the tubenest), instant burning of the product adhering to the tube.

The distribution system that has been developed in the T.A.S.T.E. Evaporator prevents this effect not only when the flow of the product being fed is compliant with design specifications but also when it falls dramatically below such value.

This particularly owes to the smooth spreading obtained by using a converging-diverging cone, enabling the product - which is lightly over-heated compared to the temperature corresponding to the vapor pressure inside the exchanger and in the conical top space where it is fed - to form a liquid-vapor mixture whose volume is expanded to five-six times the original volume.

The finely misted liquid phase is carried by high turbulent vapor flow, into the tubenest, whereon it is evenly distributed.

When the mixture comes in contact with the tubes that have been heated up by the vapor from the previous effect, it starts evaporating, which entrains a further volume increase, as well as two critical effects in the evaporation process:
- compression of the liquid against the tube walls, which:
   o facilitates and completes the tube wetting process;
   o facilitates adhesion of the thin liquid film to the inner surface of the tube;
   o increases the heat exchange coefficient, due to turbulence.
- progressive acceleration of the mixture in the shell-and-tube exchanger due to vapor entraining the liquid phase (adhering to the tube). The high speed of a few hundreds of kilometers/hour being reached at the exchanger outlet.

The drawbacks of the prior art as described above lie in that:
- T.A.S.T.E. Evaporator systems cannot reach high concentrations of the product being fed if the latter is not adequately refined and depulped;
- Forced Circulation Evaporator systems provide high concentrations even on non-depulped products, but have certain well-known and apparent drawbacks, such as:
   o a high heat damage, resulting in an alteration of the product's organoleptic properties due to extended temperature treatment times during concentration;
   o high power required to provide adequate product circulation during concentration.

The object of this invention is to provide a system that is capable of combining the advantages of T.A.S.T.E. Evaporators and of Forced Circulation units.

This result is achieved by utilizing, for most effects, the advantages of T.A.S.T.E. Evaporators and for the last effect (when concentration would not allow regular operation) the advantages of Forced Circulation units.

This allows to concentrate high viscosity products (for whose treatment Forced Circulation Evaporator systems have always been preferred over T.A.S.T.E. Evaporators), thereby obtaining the following advantages:
- a reduced heat damage on the product during the evaporating steps to preserve organoleptic properties (which has always led to a preference for the T.A.S.T.E. Evaporator, by virtue of its particularly short concentration times: a few minutes against more than 90 minutes, with equal concentration results);
- a reduced power requirement (the T.A.S.T.E. Evaporator is known to allow a power consumption reduction of at least one order of magnitude).

These objects and advantages are achieved by the system of this invention, which is characterized by the annexed claims.

These and other characteristics will be more apparent from the following description of a typical embodiment, which is shown by way of example and without limitation in the accompanying drawings, in which:
- Figure 1 shows an exemplary embodiment of an evaporator system for fruit or vegetable purees and juices which uses a combination of a T.A.S.T.E. unit and a Forced Circulation finishing unit;
- Figure 2 is a schematic view of the assembly consisting of a Forced Circulation unit having m effects and a T.A.S.T.E. unit having (n-m effects) .

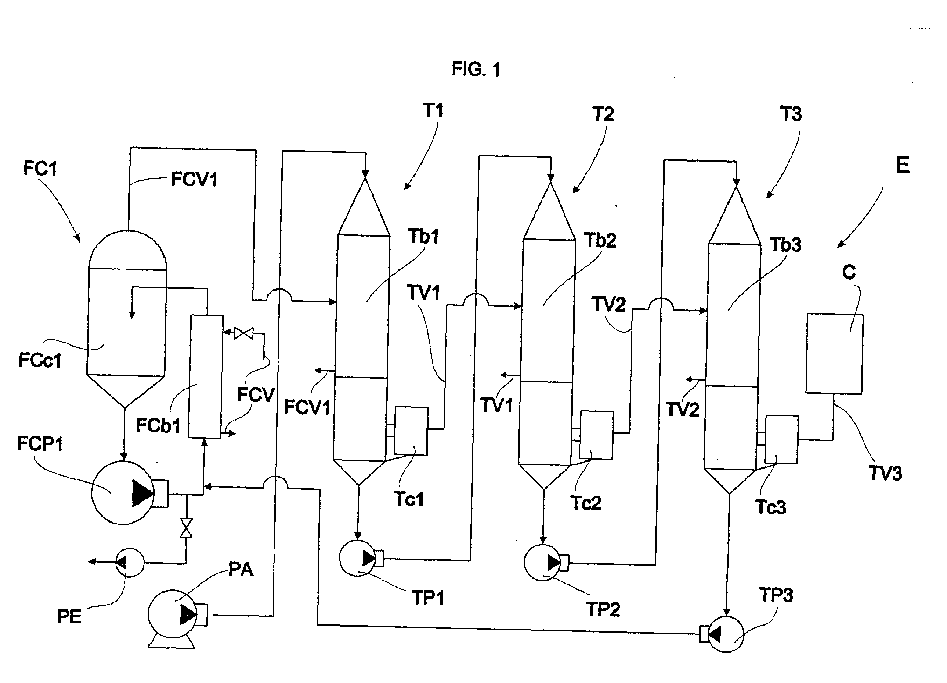

Referring to Figure 1, E denotes an evaporator/concentrator system composed of a T.A.S.T.E. unit having three effects and three stages and a Forced Circulation finishing unit FC1 having a single stage, designed for final concentration of the product that has been partially concentrated by the T.A.S.T.E. unit.

Such evaporator system E features a pump PA for feeding the product to be concentrated, a pump PE for extracting the concentrated product from the Forced Circulation unit, and a number of pumps TP1, TP2, TP3 at the bottom of each stage of the T.A.S.T.E. unit, for forcing the product to the top of the next stages and, finally to the Forced Circulation finishing unit, which concentrates the product to the desired final degree.

In certain cases, two or more stages of the T.A.S.T.E. unit may be advantageously laid one above the other, to reduce the number of transfer pumps.

The motive force for the evaporation process is provided by live steam FCV which is introduced through the shell side of the heat exchanger FCb1 and thereby causes the product circulating on the tube side to be heated up and flashed (with vapor release) in the vapor separation chamber.

The vapor FCV1 extracted from the separation chamber FCc1 is then fed to the exchanger Tb1 of the next effect T1, where it acts as a motive force for a new evaporation of moisture from the product being concentrated.

The re-evaporation/condensation process continues to the last effect T3 in much the same manner.

Finally, the vapor at the outlet of the last effect (T3) is condensed in a condenser C having an adequate capacity, which is maintained under vacuum by a suitable uncondensable ejecting system.

These steps are controlled by appropriate members for shutting off and controlling the flow of vapor and of the product to be concentrated.

The product may flow in each T.A.S.T.E. T1, T2, T3 or Forced Circulation unit FC1, in equi-current, counter-flow or mixed flow arrangements.

Reference has been made herein, by way of example, to an evaporator system having three T.A.S.T.E. stages T1, T2, T3 and a final Forced Circulation finishing unit FC1, operating as a first effect and as a last stage.

As a whole, such exemplary system has four stages and four effects.

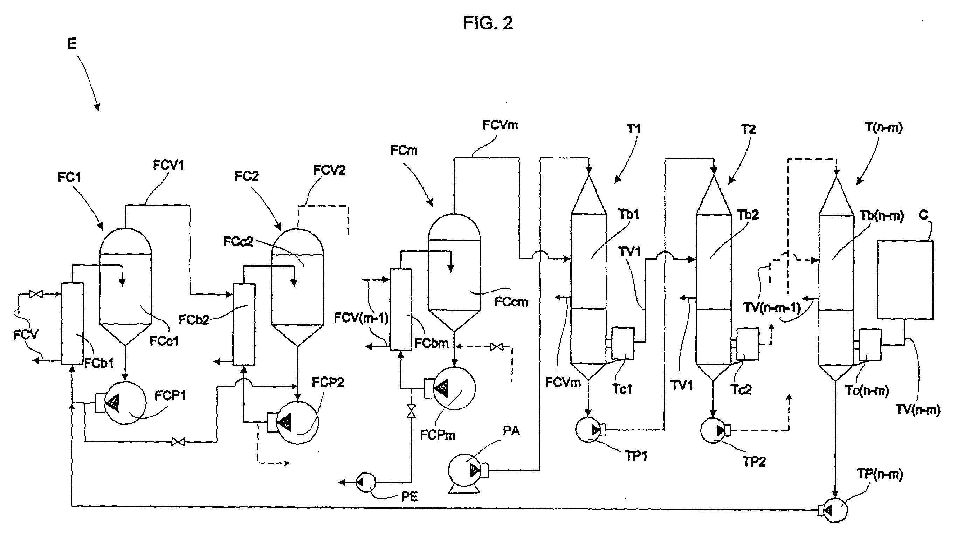

More generally, referring to Figure 2, the evaporator system E may be composed of n effects, including m Forced Circulation effects and n-m T.A.S.T.E effects, with n-m (number of T.A.S.T.E effects) being always greater than m (number of Forced Circulation effects) and without excluding that one or more effects may be divided into multiple stages.

Therefore, in its most general form, the evaporator system E is composed of:
- a Forced Circulation unit FC1, FC2, ..., FCm having multiple effects and multiple stages, each consisting of:
   o a heat exchanger FCb1, FCb2, ..., FCbm;
   o a vapor separation chamber FCc1, FCc2, ..., FCcm ;
   o a product circulating pump FCP1, FCP2, ..., FCPm (in upward direction);
- a T.A.S.T.E. unit T1, T2, ..., T(n-m) having multiple effects and multiple stages, each consisting of:
   o a shell-and-tube exchanger Tb1, Tb2, ..., Tb(n-m);
   o a vapor separation chamber Tc1, Tc2, ..., T(c-m) ;
   o a pump TP1, TP2, ... TP(n-m) for forcing the product to the next stage and finally to the Forced Circulation finishing unit, to concentrate the product to the desired final degree.

This general form also allows to lay two or more stages of the T.A.S.T.E. unit one above the other, to reduce the number of transfer pumps.

Also, in each T.A.S.T.E. unit T1, T2, ..., T(n-m) unit or Forced Circulation unit FC1, FC2, ..., FCm, the product may flow in equi-current, counter-flow or mixed flow arrangements.

Regarding the general exchanger of the Forced Circulation unit (FCbi), excepting the first effect, which is supplied with live steam (FCV), it is always supplied with the vapor from the separation chamber (FCc(i-1)) of the previous effect, which heats the product circulating in the tubes of the shell-and-tube exchanger and in turn releases vapor (FCVi) when it enters the vapor separation chamber (FCci).

Regarding the effects of the T.A.S.T.E. unit T1, T2, T..., T(n-m), the first is supplied with vapor from the separation chamber FCcm of the last effect of the Forced Circulation finishing unit FCm, and the remaining effects T2, ..., T(n-m) are supplied with vapor generated in the previous effect.

The product to be concentrated is fed by means of the feeding pump PA to the T.A.S.T.E. unit (T) and, after running through all the stages of such unit, is led to the pump TP(n-m) of the Forced Circulation finishing evaporative unit FC.

## Claims

1. An evaporator system (E) for fruit and vegetables having a low power consumption and a very low heat damage, with multiple effects and multiple stages, **characterized in that** it comprises a combination of:
a. a T.A.S.T.E. Evaporator unit having one or more effects and stages (T1, T2, ..., T(n-m));
b. a Forced Circulation finishing evaporator unit, having one or more effects and stages (FC1, FC2, ..., FCm);
c. a pump (PA) for feeding the product to be concentrated to the evaporator system;
d. a pump (TP(n-m)) for drawing the product from the last effect of the T.A.S.T.E. unit (T(n-m)), and transferring it to the inlet of the Forced Circulation unit (FC), where it is further concentrated to the desired degree;
e. a pump (PE) for extracting the product from the Forced Circulation finishing unit (FC);
f. a number of pumps for transferring the product among the various stages of the T.A.S.T.E. unit (TP1, TP2, ..., TP(n-m-1)) whose number may be reduced when two or more stages are placed one above the other.

2. An evaporator system (E) as claimed in claim 1, **characterized in that** it is composed of n effects, including m Forced Circulation effects and n-m T.A.S.T.E effects, with n-m being always greater than m.

3. An evaporator system (E) as claimed in claim 2, **characterized in that** one or more effects may be divided into multiple stages.

4. An evaporator system (E) as claimed in claim 1, **characterized in that** the Forced Circulation finishing unit has one or more effects and stages, each composed of one heat exchanger (FCbi), which is supplied with vapor - the first effect being supplied with live steam (FCv) - to heat the circulating product in the tubes of the shell-and-tube exchanger, and in turn releases vapor (FCVi) as it enters the vapor separation chamber (FCCi) .

5. An evaporator system (E) as claimed in claims 1 and 4, **characterized in that** the first effect (T1) of the T.A.S.T.E. unit is supplied with vapor (FCVm) from the separation chamber (FCcm) of the last effect of the Forced Circulation finishing unit (FCm), and the remaining effects (T2, ..., T(n-m)) are supplied with vapor generated in the previous effect.

6. An evaporator system (E) as claimed in claims 1 and 5, **characterized in that** the vapor from the last effect (T(n-m)) is condensed in a condenser C, which is maintained under vacuum by a special uncondensable-ejecting system.

7. An evaporator system (E) as claimed in claim 1, **characterized in that** the pump (PA) feeds the product to be concentrated into the T.A.S.T.E unit (T).

8. An evaporator system (E) as claimed in claims 1 and 7, **characterized in that** in each T.A.S.T.E. evaporative unit (T1, T2, ..., T(n-m)) unit or Forced Circulation finishing unit (FC1, FC2, ..., FCm), the product may flow in equi-current, counter-flow or mixed flow arrangements.
